# EUROPÄISCHE PATENTSCHRIFT

(11) **EP 3 452 650 B1**
(45) Veröffentlichungstag und Bekanntmachung des Hinweises auf die Patenterteilung: **10.06.2020**
(21) Anmeldenummer: 16788656.3
(22) Anmeldetag: 24.10.2016
(51) Int. Cl.: D04B 21/12, D04B 23/22

(54) **KUNSTSTOFFNETZ MIT DOPPELTEN KETTEN**
SYNTHETIC NETTING WITH DOUBLE WARP CHAINS
STRUCTURE AJOURÉE SYNTHÉTIQUE AVEC CHAÎNETTES DOUBLES

(30) Priorität: 04.05.2016 DE 102016108342
(43) Veröffentlichungstag der Anmeldung: 13.03.2019
(73) Patentinhaber: Karatzis S.A. Industrial & Hotelier Enterprises, 71601 Heraklion, Kreta (GR)
(72) Erfinder: KARATZIS, Antonios, Heraklion Kreta (GR)
(74) Vertreter: Karakatsanis, Georgios
(86) Internationale Anmeldenummer: PCT/EP2016/075567
(87) Internationale Veröffentlichungsnummer: WO 2017/190812

(56) Entgegenhaltungen:
- WO-A1-2012/160403
- DE-A1- 4 008 477
- DE-A1- 19 638 392
- GB-A- 2 124 975

## Beschreibung

Die Erfindung betrifft ein Kunststoffnetz, insbesondere ein sogenanntes Raschelnetz.

Derartige Kunststoffnetze bzw. Raschelnetze sind bekannt. Raschelnetze dienen vielfältigen Einsatzzwecken und werden aus einem Kunststofffaden mit Hilfe geeigneter Vorrichtungen (Raschelmaschinen) gewirkt, indem über die gesamte Maschinenbreite jeweilige Kunststofffäden mit Hilfe von speziellen Nadeln zu Fäden verschlungen werden.

Ein Beispiel für ein derartiges Raschelnetz ist aus der EP 1 851 385 A1 bekannt, die die Nutzung eines Raschelnetzes beispielhaft für einen Baustellenzaun zeigt. Je nach Stärke der verwendeten Fäden sind unterschiedliche Anwendungen möglich. So können zum Beispiel auch sehr leichte Netze hergestellt werden, die zum Beispiel zum Einwickeln von Heuballen dienen.

Bei der Herstellung derartig leichter Netze kommt es einerseits darauf an, dass die Netze ein möglichst geringes Gewicht aufweisen, was einhergeht mit entsprechend niedrigem Materialaufwand und damit niedrigen Materialkosten. Andererseits müssen die Netze aber auch eine ausreichende Festigkeit erreichen, damit sie ihre Funktion erfüllen können. Es ist somit nicht ohne weiteres möglich, durch Einsatz von dünneren Kunststofffäden bzw. Kunststofffäden mit geringerem Querschnitt Material zu sparen, weil die dünnen Fäden dann keine ausreichende Festigkeit mehr besitzen.

Aus der WO 2012/160403 A1 ist ein Netz mit einem Verlängerungs-Indikator offenbart.

Die DE 40 08 477 A1 zeigt ein Verfahren zur Herstellung von Netzen mit genauen und rechtwinkligen Maschen.

In der GB 2 124 975 wird ein Heuballennetz für landwirtschaftliche Zwecke gezeigt.

Aus der DE 196 38 392 A1 ist eine Kettenwirkmaschine mit einer Wirknadelreihe bekannt.

Der Erfindung liegt die Aufgabe zugrunde, ein Kunststoffnetz anzugeben, mit dem eine Verminderung des Materialeinsatzes und damit des Gewichts möglich ist, ohne Festigkeitseinbußen zu erleiden.

Die Aufgabe wird erfindungsgemäß durch ein Kunststoffnetz mit den Merkmalen von Anspruch 1 gelöst. Vorteilhafte Ausgestaltungen sind den abhängigen Ansprüchen zu entnehmen.

Ein Kunststoffnetz weist mehrere sich in Längsrichtung parallel zueinander erstreckende Ketten auf, wobei wenigsten zwei Ketten sich mit geringem Abstand zueinander erstrecken und eine Kettengruppe bilden. Wenigstens eine weitere Kette ist zu der Kettengruppe benachbart, wobei der Abstand zwischen dieser Kette und der Kettengruppe größer ist als der geringe Abstand der Ketten innerhalb der Kettengruppe. Ein Faden verläuft zwischen der weiteren Kette und der Kettengruppe hin und her und verbindet die weitere Kette und die Kettengruppe.

Das Kunststoffnetz kann insbesondere ein sogenanntes Raschelnetz sein, das Ketten aufweist, die aus Fäden gewirkt sind. Jede einzelne Kette wird dabei durch das Verschlingen eines oder mehrerer Fäden hergestellt. Auf geeigneten Maschinen, insbesondere auf Raschelmaschinen, können gleichzeitig parallel eine Vielzahl von Ketten gewirkt werden.

Die verschiedenen Ketten bzw. Kettengruppen werden - wie später noch erläutert wird - jeweils durch weitere hin und her verlaufende Fäden quer verbunden, wodurch das gesamte Kunststoffnetz gebildet wird.

Dabei wird durch die Raschelmaschine und die in der Raschelmaschine vorhandene n Nadeln wenigstens eine, vorzugsweise aber mehrere Kettengruppen gebildet, in denen jeweils mindestens zwei einzelne Ketten relativ dicht, also mit geringem Abstand, nebeneinander verlaufen.

Während also im Stand der Technik jeweils immer nur eine Kette verläuft, die links und rechts über Fäden mit benachbarten weiteren Ketten quer verbunden ist, ist erfindungsgemäß das Kunststoffnetz vollständig durch Kettengruppen gebildet, die dann gemeinsam links und rechts mit einer weiteren Kettengruppe über hin und her verlaufende Fäden verbunden sind.

Somit kann das Kunststoffnetz aus doppelten Fadenketten (Kettengruppe mit zwei Ketten, die jeweils aus einem oder mehreren Fäden gewirkt sind) gebildet werden. Eine Kettengruppe kann aber auch mehr als zwei Ketten umfassen.

Die Anordnung von Kettengruppen kann je nach Einsatzzweck gewählt werden. Zum Beispiel ist es möglich, am Rand des Kunststoffnetzes mehrere Kettengruppen vorzusehen, die - da jeweils mit doppelten Ketten versehen - eine höhere Festigkeit haben als einzelne Ketten.

Erfindungsgemäß ist das Kunststoffnetz vollständig durch Kettengruppen, also mit jeweils wenigstens doppelten Ketten gebildet, die dann ihrerseits mit hin und her verlaufenden Fäden verbunden sind.

Die hin und her verlaufenden Fäden verbinden die Zwischenräume, die zwischen mit größerem Abstand benachbarten Ketten bestehen.

Dadurch, dass Ketten zu Kettengruppen gruppiert sind, kann eine besonders hohe Festigkeit des Kunststoffnetzes erreicht werden. Im Gegenzug können die Ketten aus einem Kunststofffadenmaterial hergestellt werden, das eine geringere Dicke als bisherige Fäden aufweist. Dadurch lässt sich eine Gewichtsersparnis bei gleichbleibender Festigkeit des Netzes erzielen. Ebenso ist es aber auch möglich, ein Netz herzustellen, bei dem das Gewicht pro Mengeneinheit im Verhältnis zu bekannten Netzen unverändert ist, jedoch eine höhere Festigkeit erreicht wird.

Zudem kann mithilfe der doppelten Ketten eine bessere Flächendeckung beim Verpacken von Gegenständen durch Umwickeln mit dem Netz erreicht werden. Auch der optische Eindruck lässt sich durch die doppelten Ketten verbessern. Über die Breite des Netzes betrachtet, wird durch das Vorsehen von Kettengruppen die Anzahl der Ketten pro Breite erhöht, wodurch auch dann die Festigkeit erhöht werden kann, wenn die einzelnen Ketten aus einem dünneren Kunststoffmaterial gefertigt werden.

Die weitere Kette kann ihrerseits Teil einer weiteren Kettengruppe sein, die durch die weitere Kette und wenigstens noch eine weitere Kette gebildet ist, wobei der Faden zwischen der Kettengruppe und der weiteren Kettengruppe hin und her verläuft.

Um dies zu erreichen, sind an der Raschelmaschine entsprechende Nadeln (doppelte Nadeln) vorzusehen, wie später noch erläutert wird.

Es können mehrere zueinander benachbarte Kettengruppen vorgesehen sein, die jeweils aus wenigstens zwei Ketten gebildet sind (doppelte Ketten), wobei die Kettengruppen einen größeren Abstand zueinander aufweisen als die Ketten innerhalb einer Kettengruppe und wobei jeweils ein Faden zwischen zwei benachbarten Kettengruppen hin und her verläuft und die Kettengruppen verbindet. Der Faden wird dazu mit den beiden betreffenden Kettengruppen vernäht.

Der Abstand zwischen zwei direkt benachbarten Ketten innerhalb einer Kettengruppe kann in einem Bereich zwischen 2 Millimeter und 10 Millimeter insbesondere in einem Bereich zwischen 2 Millimeter und 5 Millimeter liegen. Als Abstand wird damit der Abstand zwischen den virtuellen Mittellinien (Längslinien) der Ketten verstanden. Da die Ketten eine bestimmte Breite aufweisen, bedeutet ein Abstand im unteren Bereich, also zum Beispiel ein Abstand von 2 Millimeter, dass sich die Ketten innerhalb dieser Kettengruppe berühren. Die angegebenen Abstandswerte entsprechen dem genannten "geringen Abstand".

Die Angabe "geringer Abstand" bedeutet somit, dass die Ketten auch nahezu gar keinen Abstand zueinander haben müssen bzw. sich somit also berühren können. Sie sollen sich somit dicht nebeneinander erstrecken.

Der Abstand zwischen der jeweiligen Kettengruppe und der weiteren Kette bzw. einer benachbarten Kettengruppe kann in einem Bereich zwischen 20 Millimeter und 80 Millimeter, insbesondere zwischen 25,4 mm (1 Zoll) und 76,2 mm (3 Zoll), insbesondere zwischen 25,4 mm (1 Zoll) und 50,8 mm (2 Zoll) liegen.

Auch hier wird der Abstand als Abstand zwischen den virtuellen (gedachten) Mittellinien von jeweils benachbarten Ketten betrachtet.

Die gesamte Breite des Kunststoffnetzes kann in einem Bereich zwischen 30 und 200 Zentimeter, insbesondere zwischen 50 und 170 Zentimeter liegen, wobei auch noch breitere Netze ohne weiteres möglich sind.

Wenigsten eine der Ketten kann aus einem Kunststofffilm-Faden hergestellt sein. Dabei wird ein derartiger Faden aus einem Kunststofffilm geschnitten oder extrudiert und dann mit Hilfe der Raschelmaschine verarbeitet. Durch entsprechendes Verschlingen wird aus einem Faden eine Kette gewirkt bzw. gestrickt. Dabei ist es auch möglich, eine einzelne Kette nicht nur aus einem sondern aus zwei oder mehr Fäden zu stricken.

Der Kunststofffilm eines Kunststofffilm-Fadens kann eine Dicke von 100 Mikrometer oder weniger, insbesondere von 80 Mikrometer oder weniger, insbesondere von 60 Mikrometer oder weniger, insbesondere von 40 Mikrometer oder weniger aufweisen. Selbstverständlich sind auch entsprechende Zwischenbereiche möglich. Im Stand der Technik wurden zum Beispiel bisher Kunststofffilm-Fäden mit einer Dicke von 80 Mikrometer verarbeitet. Durch die erhöhte Festigkeit aufgrund der Kettengruppen mit doppelten Ketten kann es ausreichen, Fäden mit einer Dicke von zum Beispiel nur 60 Mikrometer zu verarbeiten, um daraus die Ketten herzustellen.

Insgesamt kann ein derartig hergestelltes Kunststoffnetz zum Beispiel ein Gewicht von lediglich 10 bis 12 Gramm pro laufendem Meter erreichen.

Wenigstens ein Teil der Kettengruppen kann drei oder mehr Ketten aufweisen. Es ist somit möglich, einzelne oder auch alle Kettengruppen besonders stark auszubilden und mit mehr als zwei Ketten auszustatten.

Der zwischen zwei benachbarten Ketten bzw. Kettengruppen hin und her verlaufende Faden kann zum Beispiel zickzack-förmig verlaufen. Er wird mit den betreffenden Ketten bzw. Kettengruppen vernäht und füllt die breiten Zwischenräume zwischen diesen Ketten bzw. Kettengruppen.

Der hin und her verlaufende Faden kann ein Einzelfaden sein. Bei einer besonderen Ausführungsform kann er auch aus wenigstens zwei gemeinsam miteinander verlaufenden Fadenelementen bestehen und somit ein Doppelfaden sein. Auch dadurch lässt sich die Festigkeit erhöhen.

Eine Vorrichtung zum Herstellen eines derartigen Kunststoffnetzes kann insbesondere eine Raschelmaschine sein, wobei an der Raschelmaschine jeweils wenigstens zwei Locknadeln vorgesehen sind, zum Führen jeweils eines Kunststofffilm-Fadens, aus dem jeweils eine Kette gestrickt wird. Die jeweils zwei Lochnadeln können von einem gemeinsamen Lochnadel-Träger getragen werden. Den beiden Lochnadeln können zwei Nadeln zugeordnet sein und von einem gemeinsamen Nadelträger getragen werden.

Der Abstand zwischen zwei benachbarten Lochnadeln und/oder zwischen zwei direkt benachbarten Nadeln kann in einem Bereich zwischen 2 und 10 Millimeter, insbesondere zwischen 2 und 5 Millimetern liegen. Dadurch lassen sich die Kettengruppen bzw. hier die Doppelketten sehr einfach im Normalbetrieb der Raschelmaschine fertigen.

Diese und weitere Merkmale und Vorteile der Erfindung werden nachfolgend anhand von Beispielen unter Zuhilfenahme der begleitenden Figuren erläutert. Es zeigen:
- **Figur 1**: einen Ausschnitt aus einem nicht erfindungsgemäßen Kunststoffnetz;
- **Figur 2**: eine Ausführungsform eines Kunststoffnetzes in verschiedenen Einsatzsituationen;
- **Figur 3**: einen in das Kunststoffnetz eingewickelten Heuballen;
- **Figur 4**: einen schematischen Aufbau einer Raschelmaschine bisheriger Bauart; und
- **Figur 5**: ein Detail aus einer Raschelmaschine.

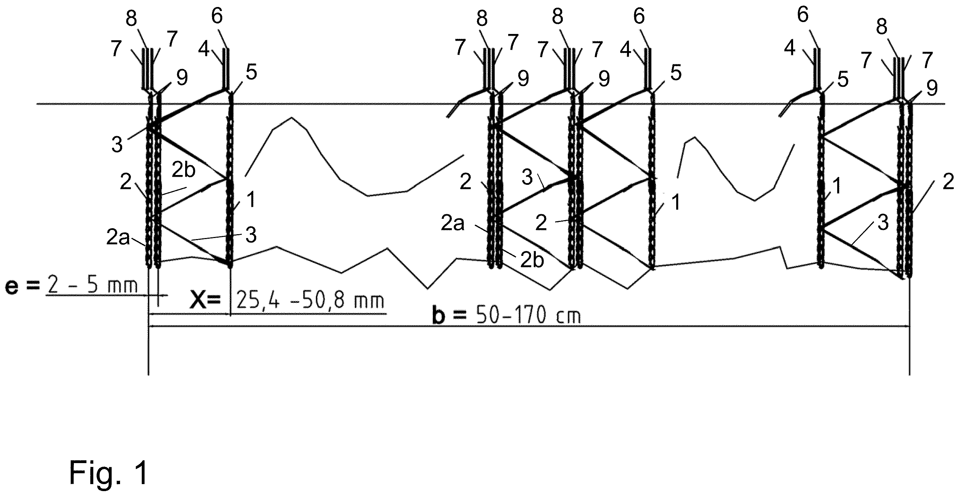

Figur 1 zeigt einen Ausschnitt aus einem nicht erfindungsgemäßen Kunststoffnetz.

Bei dem Kunststoffnetz erstrecken sich mehrere bzw. eine Vielzahl von Ketten parallel zueinander, von denen in Fig. 1 nur einige ausschnittsweise dargestellt sind. Jede einzelne Kette wird aus einem oder mehreren Kunststofffäden gestrickt bzw. gewoben, wobei die Herstellungsprozesse der Kunststofffäden bzw. Ketten parallel verlaufen, so dass das Kunststoffnetz als eine Einheit gewirkt werden kann.

Ein Teil der Ketten verläuft als Einzelkette 1. Andere Ketten sind zueinander gepaart und bilden jeweils eine Doppelkette 2. Die Anordnung von zwei zueinander gepaarten, das heißt mir nur sehr geringem Abstand zueinander verlaufenden Ketten 2a, 2b einer Doppelkette 2 wird auch als Kettengruppe bezeichnet.

Wie aus Figur 1 ersichtlich, erstrecken sich die einzelnen Ketten 2a, 2b einer Doppelkette 2 mit nur geringem Abstand e von zum Beispiel 2 bis 5 Millimeter. Der Abstand e ist dabei derart gering, dass sich die Ketten 2a, 2b in der Praxis wenigstens teilweise berühren werden.

Dem gegenüber verlaufen die Einzelketten 1 mit einem größeren Abstand x von zum Beispiel 1 Zoll (25,4 Millimeter) bis zu 2 Zoll (50,8 Millimeter), je nach Aufbau der Raschelmaschine. Die angegebenen Werteangaben sind Circa-Angaben und können in der Praxis ohne weiteres abweichen. Entscheidend ist dabei allein, dass der Abstand der Ketten innerhalb einer Kettengruppe bzw. Doppelkette 2 erheblich kleiner ist als der Abstand x zu einer entfernt benachbarten Kette.

Die Gesamtbreite des Netzes kann ebenfalls je nach Anwendungsform variiert werden und zum Beispiel in einem Bereich von 50 bis 170 Zentimeter liegen.

Zwischen den entfernt benachbarten Ketten verläuft jeweils ein Faden 3 zickzack-förmig, der ebenfalls aus einem Kunststofffilm-Material hergestellt wird und den breiten Abstand überdeckt. Der Faden 3 wird mit den jeweiligen Ketten (Einzelketten 1, Doppelketten 2) vernäht.

Die Figur 1 zeigt nur einen Ausschnitt aus dem gesamten Netz. Selbstverständlich sind auch die dazwischen liegenden Bereiche durch entsprechende Einzelketten 1 oder Doppelketten 2 ausgestattet. Insgesamt können sich über die Breite des Netzes wenigstens 50 Ketten oder auch mehr parallel erstrecken.

Zur Herstellung einer Einzelkette 1 ist eine einzelne Lochnadel 4 vorgesehen, die mit einer einzelnen Nadel 5 zusammen wirkt. Durch entsprechendes Führen des Kunststofffadens kann dadurch die Einzelkette 1 gestrickt werden. Zudem ist ein Lochnadelblech 6 vorgesehen.

Die Herstellung einer Doppelkette 2, die aus zwei Einzelketten 2a, 2b besteht, erfolgt mit Hilfe von zwei Lochnadeln 7, die von einem Lochnadelträger 8 gehalten werden und jeweils mit einer Nadel 9 zusammenwirken.

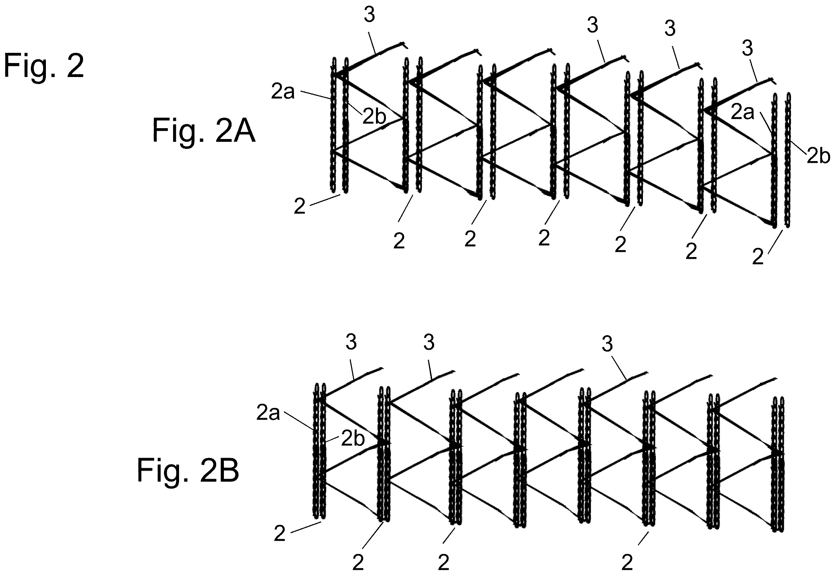

Figur 2 zeigt eine erfindungsgemäße Ausführungsform des Netzes, bei der keine Einzelketten sondern ausschließlich Doppelketten 2 vorgesehen sind, die jeweils durch Fäden 3 miteinander verbunden sind.

Figur 2A zeigt die Ausgangssituation, bei der die jeweiligen Einzelketten 2a, 2b einer Doppelkette 2 noch einen gewissen Abstand zueinander aufweisen.

Nach Aufwickeln des Netzes zum Beispiel um einen Heuballen straffen sich die Ketten 2a, 2b und ziehen sich dadurch enger zusammen, wie in Figur 2B gezeigt.

Der Abstand zwischen den Einzelketten 2a, 2b verringert sich derart, dass sich die Einzelketten 2a, 2b berühren. Dadurch verstärken sich die Ketten 2a, 2b gegenseitig, so dass eine hohe Festigkeit erreicht werden kann.

Beim Umhüllen eines Heuballens an einer Wickelmaschine wird das Netz mit starker Zugkraft um den Heuballen herum gewickelt, damit dieser festgepresst wird. Dadurch straffen sich die Ketten 2a, 2b und bewegen sich näher zueinander, wodurch einerseits eine festere Wirkung und andererseits auch ein besseres optisches Resultat des Ballens erreicht wird.

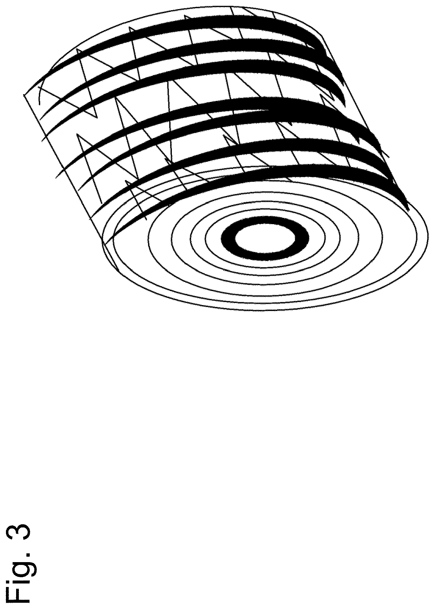

Figur 3 zeigt schematisch, wie ein Heuballen durch das erfindungsgemäße Kunststoffnetz zusammengehalten werden kann.

Der verbesserte optische Gesamteindruck ist auf das Vorsehen von Doppelketten 2 zurückzuführen.

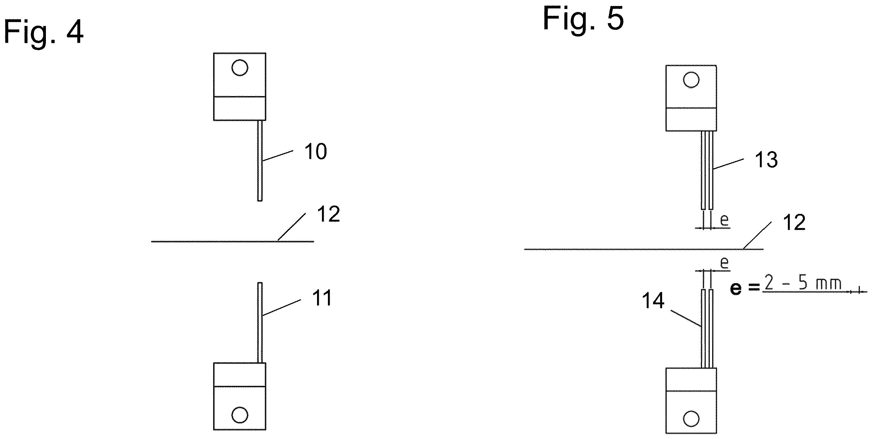

In Figur 4 ist ein Ausschnitt aus einem schematischen Aufbau einer bekannten Raschelmaschine gezeigt, mit einer Lochnadel 10 und mehreren Nadeln 11 (von denen in Fig. 4 nur eine gezeigt ist), die um eine Maschinenebene 12 herum angeordnet sind. Die Maschinenebene 12 kennzeichnet den Bereich in dem die Nadeln 10, 11 zusammenwirken, um eine jeweilige Kette aus einem Kunststofffilm-Faden zu wirken.

Figur 5 zeigt demgegenüber eine neuartige Raschelmaschine, mit einer Doppel-Lochnadel 13, der gegenüber entsprechende Doppel-Nadeln 14 angeordnet sind. Der Abstand zwischen den Lochnadeln der Doppel-Lochnadel 13 beträgt in dem gezeigten Beispiel e = 2-5 mm und ist einstellbar. Zum Einstellen der Abstände zwischen den Nadeln bzw. Lochnadeln kann die Raschelmaschine entsprechend modifiziert werden.

Die in Figur 5 gezeigte Anordnung ist in der Lage, eine Doppelkette 2 zu fertigen. Zur Herstellung eines gesamten Netzes sind dementsprechend viele Doppel-Lochnadeln 13 und Doppel-Nadeln 14 vorzusehen, die nebeneinander im Bereich der Maschinenebene 12 angeordnet sein müssen, wie auch Figur 1 zeigt.

## Patentansprüche

1. Kunststoffnetz, mit mehreren sich in Längsrichtung parallel zueinander erstreckenden Ketten (2a, 2b), wobei
- wenigsten zwei Ketten (2a, 2b) sich mit geringem Abstand zueinander erstrecken und eine Kettengruppe (2) bilden;
- wenigstens eine weitere Kette (2a, 2b) zu der Kettengruppe (2) benachbart ist, wobei der Abstand zwischen dieser Kette (2a, 2b) und der Kettengruppe (2) größer ist als der geringe Abstand der Ketten (2a, 2b) innerhalb der Kettengruppe (2);
- ein Faden (3) zwischen der weiteren Kette (2a, 2b) und der Kettengruppe (2) hin und her verläuft und die weitere Kette (2a, 2b) und die Kettengruppe (2) verbindet;
- mehrere zueinander benachbarte Kettengruppen (2) vorgesehen sind, die jeweils aus wenigstens zwei Ketten (2a, 2b) gebildet sind;
- die Kettengruppen (2) einen größeren Abstand zueinander aufweisen als die Ketten (2a, 2b) innerhalb einer Kettengruppe (2); und wobei
- jeweils ein Faden (3) zwischen zwei benachbarten Kettengruppen (2) hin und her verläuft und die Kettengruppen (2) verbindet;
**dadurch gekennzeichnet, dass**
- das Kunststoffnetz vollständig durch Kettengruppen (2) gebildet ist.

2. Kunststoffnetz nach einem der vorstehenden Ansprüche, wobei der Abstand zwischen zwei direkt benachbarten Ketten (2a, 2b) in einer Kettengruppe (2) in einem Bereich zwischen 2 und 10 mm liegt.

3. Kunststoffnetz nach einem der vorstehenden Ansprüche, wobei der Abstand zwischen einer Kettengruppe (2) und der weiteren Kette (1) in einem Bereich zwischen 20 Millimeter und 80 Millimeter liegt.

4. Kunststoffnetz nach einem der vorstehenden Ansprüche, wobei wenigstens eine der Ketten aus einem Kunststofffilm-Faden hergestellt ist.

5. Kunststoffnetz nach Anspruch 4, wobei der Kunststofffilm des Kunststofffilm-Fadens eine Dicke von 100 *µ*m oder weniger aufweist.

6. Kunststoffnetz nach einem der vorstehenden Ansprüche, wobei wenigstens ein Teil der Kettengruppen drei oder mehr Ketten aufweist.

7. Kunststoffnetz nach einem der vorstehenden Ansprüche, wobei der hin und her verlaufende Faden (3) zickzack-förmig verläuft.

8. Kunststoffnetz nach einem der vorstehenden Ansprüche, wobei der hin und her verlaufende Faden (3) aus wenigstens zwei gemeinsam miteinander verlaufenden Fadenelementen besteht.

## Claims

1. A synthetic netting with several warp chains (2a, 2b) extending in parallel to each other in the longitudinal direction, wherein
- at least two warp chains (2a, 2b) extend at a small distance from one another and form a chain group (2) ;
- at least one further warp chain (2a, 2b) is adjacent to the chain group (2),
wherein the distance between this warp chain (2a, 2b) and the chain group (2) is greater than the small distance between the warp chains (2a, 2b) within the chain group (2);
- a thread (3) runs back and forth between the further warp chain (2a, 2b) and the chain group (2) and connects the further warp chain (2a, 2b) and the chain group (2);
- several chain groups (2) adjacent to each other are provided which are each formed of at least two warp chains (2a, 2b);
- the chain groups (2) are at a greater distance from one another than the warp chains (2a, 2b) within a chain group (2); and wherein
- in each case one thread (3) runs back and forth between adjacent chain groups (2) and connects the chain groups (2);
**characterised in that**
- the synthetic netting is completely formed by chain groups (2).

2. The synthetic netting according to claim 1, wherein the distance between two directly adjacent warp chains (2a, 2b) in a chain group (2) is in a range of between 2 and 10 mm.

3. The synthetic netting according to any one of the preceding claims, wherein the distance between one chain group (2) and the further warp chain (1) is in a range of between 20 millimetres and 80 millimetres.

4. The synthetic netting according to any one of the preceding claims, wherein at least one of the warp chains is made of a synthetic film thread.

5. The synthetic netting according to claim 4, wherein the synthetic film of the synthetic film thread is of a thickness of 100 µm or less.

6. The synthetic netting according to any one of the preceding claims, wherein at least one part of the chain group comprises three or more warp chains.

7. The synthetic netting according to any one of the preceding claims, wherein the thread (3) running back and forth runs in a zig-zag manner.

8. The synthetic netting according to any one of the preceding claims, wherein the thread (3) running back and forth comprises at least two thread elements running jointly with each other.

## Revendications

1. Filet en matière plastique, pourvu de plusieurs chaînes (2a, 2b) s'étendant à la parallèle dans la direction longitudinale,
- au moins deux chaînes (2a, 2b) s'étendant avec un faible écart l'une par rapport à l'autre et formant un groupe de chaînes (2) ;
- au moins une chaîne (2a, 2b) supplémentaire étant voisine du groupe de chaînes (2),
l'écart entre ladite chaîne (2a, 2b) et le groupe de chaînes (2) étant supérieur au faible écart entre les chaînes (2a, 2b) à l'intérieur du groupe de chaînes (2) ;
- un fil (3) s'écoulant en aller et retour entre la chaîne (2a, 2b supplémentaire et le groupe de chaînes (2) et reliant la chaîne (2a, 2b) et le groupe de chaînes (2) ;
- plusieurs groupes de chaînes (2) voisins les uns des autres étant prévus, qui sont respectivement formés d'au moins deux chaînes (2a, 2b) ;
- les groupes de chaînes (2) présentant un écart les uns par rapport aux autres qui est supérieur à celui des chaînes (2a, 2b) à l'intérieur d'un groupe de chaînes (2) ; et
- chaque fois un fil (3) s'écoulant en aller et retour entre deux groupes de chaînes (2) voisins et reliant les groupes de chaînes (2) ;
**caractérisé en ce que**
- le filet en matière plastique est entièrement formé par des groupes de chaînes (2).

2. Filet en matière plastique selon la revendication 1, l'écart entre deux chaînes (2a, 2b) directement voisines dans un groupe de chaînes (2) se situant dans un ordre compris entre 2 et 10 mm.

3. Filet en matière plastique selon l'une quelconque des revendications précédentes, l'écart entre un groupe de chaînes (2) et la chaîne (1) supplémentaire se situant dans un ordre compris entre 20 millimètres et 80 millimètres.

4. Filet en matière plastique selon l'une quelconque des revendications précédentes, au moins l'une des chaînes étant fabriquée en un fil de film en matière plastique.

5. Filet en matière plastique selon la revendication 4, le film en matière plastique du fil de film en matière plastique présentant une épaisseur de 100 µm ou moins.

6. Filet en matière plastique selon l'une quelconque des revendications précédentes, au moins une partie des groupes de chaînes comportant trois chaînes ou plus.

7. Filet en matière plastique selon l'une quelconque des revendications précédentes, le fil (3) s'écoulant en aller et retour s'écoulant en zigzag.

8. Filet en matière plastique selon l'une quelconque des revendications précédentes, le fil (3) s'écoulant en aller et retour étant constitué d'au moins deux éléments de fil s'écoulant en commun.
